# EUROPÄISCHE PATENTSCHRIFT

(11) **EP 2 043 005 B1**
(45) Veröffentlichungstag und Bekanntmachung des Hinweises auf die Patenterteilung: **21.08.2013**
(21) Anmeldenummer: 07019145.7
(22) Anmeldetag: 28.09.2007
(51) Int. Cl.: G06F 17/30, G02B 21/36

(54) **Verfahren und Vorrichtung zum Messen und Simulieren von Abläufen in einem Mikroskopsystem**
Method and device for measuring for simulating processes in a microscope system
Procédé at appareil destiné la mesure et à la simulation de déroulements dans un système de microscope

(43) Veröffentlichungstag der Anmeldung: 01.04.2009
(73) Patentinhaber: Carl Zeiss Microscopy GmbH, 07745 Jena (DE)
(72) Erfinder: Bauer, Johann, 84034 Landshut (DE); Weber, Christoph, 84034 Landshut (DE); Leitsch, Simon, 84174 Eching/Haunwang (DE)
(74) Vertreter: Schiffer, Axel Martin

(56) Entgegenhaltungen:
- EP-A- 1 341 023
- EP-A- 1 490 832
- EP-A1- 1 441 491
- DE-A1-102004 005 425
- FERREIRA R ET AL: "The Virtual Microscope" AMIA ANNUAL SYMPOSIUM. A CONFERENCE OF THE AMERICAN MEDICAL INFORMATICS ASSOCIATION. PROCEEDINGS. PROCEEDINGS OF AMIA ANNUAL SYMPOSIUM, XX, XX, 25. Oktober 1997 (1997-10-25), Seiten 449-453, XP002246194

## Beschreibung

Die vorliegende Erfindung bezieht sich in einem ersten Aspekt auf ein Verfahren zum Messen und Simulieren von Abläufen in einem Mikroskopsystem nach dem Oberbegriff des Anspruchs 1.

In weiteren Gesichtspunkten betrifft die Erfindung eine Vorrichtung zum Simulieren und Steuern von Abläufen in einem Mikroskopsystem nach dem Oberbegriff des Anspruchs 11. Zweiten wird ein Computerprogramm mit Programmcodemitteln zum Simulieren von Abläufen in einem Mikroskopsystem und zum Steuern des Mikroskopsystems sowie ein Computerprogrammprodukt beschrieben.

Das Mikroskopsystem, dessen interne Abläufe simuliert werden, weist dabei jeweils ein Mikroskop und eine an das Mikroskop angeschlossene Kamera zum Aufnehmen von mikroskopischen Bildern auf.

Bei einem gattungsgemäßen Verfahren wird zunächst ein hoch aufgelöstes komplettes mikroskopisches Bild einer Probe mit dem Mikroskopsystem gewonnen.

Wesentliche Komponente der erfindungsgemäßen Vorrichtung ist ein Computer.

Ein Verfahren, eine Vorrichtung und ein Computerprogramm der genannten Art sind beispielsweise aus EP 1 490 832 B1 bekannt.

Bildanalysen auf mikroskopischen Proben wird in der Regel an einem oder mehreren Einzelbildern durchgeführt, die von einer Kamera aufgenommen wurden. Komplexe Probengeometrien und Analyseaufgabenstellungen machen es dabei erforderlich, dass der Anwender die zu analysierenden Stellen in oder auf der Probe auswählt, anfährt und gegebenenfalls in einer Positionsliste ablegt. In einer klassischen Bildanalyse-Software, die nach heutigem Stand der Technik auch in der Lage ist, ein motorgetriebenes Mikroskop anzusteuern, stehen dem Anwender hierzu vielfältige interaktive Möglichkeiten zur Verfügung. Hierbei muss jeweils ein Mikroskop und die zu analysierende Probe vorhanden sein. Möchte ein Anwender die Möglichkeiten der Automatisierung von Analyseläufen nutzen, benötigt er ein oder mehrere Probenexemplare und das Mikroskop. Bei vielen Probenarten besteht die Gefahr, dass sie über die Zeit Schaden nehmen, beispielsweise durch Beleuchtung mit intensivem Licht einer bestimmten Wellenlänge zum Generieren eines Fluoreszenzsignals. In anderen Situationen zerfallen die Proben oder verlieren an Qualität allein aufgrund der verwendeten Materialien oder der durchgeführten Prozessschritte.

In EP 1 490 832 B1 ist eine Vorrichtung und ein Verfahren zum Simulieren eines Mikroskops beschrieben.

In EP 1 341 023 B1 ist ein im Wesentlichen softwarebasiertes Verfahren zum Benutzertraining für ein Scan-Mikroskop beschrieben. Hierin werden einige Abläufe des Mikroskops simuliert.

Weiterhin sind unter www.cs.umd.edu/projects/hpsl/chaos/ResearchAreas/vm/ zahlreiche Details zu virtuellen Mikroskopen beschrieben.

**Aufgabe** der Erfindung ist es, ein Verfahren, eine Vorrichtung, ein Computerprogramm und ein Computerprogrammprodukt bereitzustellen, welche eine realitätsnahe Simulation von Abläufen in einem Mikroskopsystem gestatten.

Diese Aufgabe wird in einem ersten Gesichtspunkt durch das Verfahren mit den Merkmalen des Anspruchs 1 gelöst.

In weiteren Aspekten wird diese Aufgabe durch die Vorrichtung mit den Merkmalen des Anspruchs 11, das Computerprogramm mit den Merkmalen des Anspruchs 16 und durch das Computerprogrammprodukt mit den Merkmalen des Anspruchs 26 gelöst.

Vorteilhafte Varianten des erfindungsgemäßen Verfahrens und des erfindungsgemäßen Computerprogramms sowie bevorzugte Ausführungsbeispiele der erfindungsgemäßen Vorrichtung sind Gegenstand der abhängigen Ansprüche.

Das Verfahren der oben genannten Art ist erfindungsgemäß dadurch weitergebildet, dass ein Bild, welches die Kamera bei realer Untersuchung der Probe mit dem Mikroskop

Ein Verfahren zum Herstellen und Darstellen von Computer implementierten Mikropräparate-Simulationen ist in DE 10 2004 005 425 A1 offenbart. Um solche Präparate, beispielsweise zum Einsatz in der Aus- und Weiterbildung herzustellen, wird dabei eine Serie digitaler oder analoger Fotografien mit Hilfe eines Mikroskops oder Stereomikroskops erstellt. In jeder Serie wird dabei ein mikroskopiertechnischer Parameter am Mikroskop in kleinen Schritten verändert und die Fotografien werden in einem digitalen Format abgespeichert. Diese Daten werden dann später mit einem Rechner angesehen, wobei über graphische Steuerelemente die Anzeige der Bilddaten so gesteuert werden, dass die Änderung eines mikroskopiertechnischen Parameters simuliert wird.

Weiterhin sind unter www.cs.umd.edu/projects/hpsl/chaos/ResearchAreas/vm/ zahlreiche Details zu virtuellen Mikroskopen beschrieben.

**Aufgabe** der Erfindung ist es, ein Verfahren und eine Vorrichtung bereitzustellen, welche eine realitätsnahe Simulation von Abläufen in einem Mikroskopsystem gestatten.

Diese Aufgabe wird in einem ersten Gesichtspunkt durch das Verfahren mit den Merkmalen des Anspruchs 1 gelöst.

In weiteren Aspekten wird diese Aufgabe durch die Vorrichtung mit den Merkmalen des Anspruchs 11 gelöst.

Vorteilhafte Varianten des erfindungsgemäßen Verfahrens sowie bevorzugte Ausführungsbeispiele der erfindungsgemäßen Vorrichtung sind Gegenstand der abhängigen Ansprüche.

Das Verfahren der oben genannten Art ist erfindungsgemäß dadurch weitergebildet, dass ein Bild, welches die Kamera bei realer Untersuchung der Probe mit dem Mikroskop sehen würde, auf Grundlage des hoch aufgelösten kompletten mikroskopischen Bilds der Probe und abhängig von Parametereinstellungen des Mikroskops und der Kamera in einem Computer simuliert wird.

Die Vorrichtung der oben genannten Art ist erfindungsgemäß dadurch weitergebildet, dass der Computer dazu eingerichtet ist, ein Programm auszuführen, bei dem ein Bild, welches die Kamera bei realer Untersuchung der Probe mit dem Mikroskop sehen würde, auf Grundlage eines vorab gewonnenen hoch aufgelösten kompletten mikroskopischen Bilds der Probe und abhängig von Parametereinstellungen des Mikroskops und der Kamera in dem Computer simuliert wird.

Bei dem vorgenannten Computerprogramm wird ein Bild, welches die Kamera bei realer Untersuchung einer Probe mit dem Mikroskop sehen würde, auf Grundlage eines vorhandenen hochaufgelösten kompletten mikroskopischen Bild der Probe und abhängig von Parametereinstellungen des Mikroskops und der Kamera simuliert.

Ein Computerprogrammprodukt beinhaltet Programmcodemittel, die auf einem computerlesbaren Datenträger gespeichert sind, um das erfindungsgemäße Computerprogramm auf einem Computer auszuführen.

Als Kerngedanke der Erfindung kann angesehen werden, nicht nur das Mikroskop als solches, sondern das gesamte Mikroskopsystem, also insbesondere auch eine mit dem Mikroskop verbundene Kamera zu simulieren.

Eine Grundidee der Erfindung besteht somit darin, zunächst ein hochwertiges Bild der kompletten mikroskopischen Probe zu erstellen und sodann dieses hochwertige Bild, welches auch als virtuelle Probe bezeichnet wird, in ein virtuelles Mikroskop, also ein in einem Rechner simuliertes Mikroskop, einzubinden, welches sich gegenüber der Analyse-Software genauso verhält, wie ein echtes Mikroskop. Weiterhin wird gemäß der Erfindung die virtuelle Probe in eine virtuelle Kamera eingebunden, also eine simulierte Kamera, die sich wiederum gegenüber der Analyse-Software genauso verhält, wie eine echte Kamera.

Als wesentlicher Vorteil der Erfindung kann angesehen werden, dass eine Analyse einer Probe praktisch so durchgeführt werden kann, als ob das komplette, aus Mikroskop, Kamera und Steuereinheit bestehende System vorhanden wäre. Für einen Benutzer besteht in der Bedienung und Funktionalität von Mikroskopsteuereinheit, Bildaufnahme, Bildverarbeitung und Bildauswertung mit dem virtualisierten System sehr weitgehend kein Unterschied im Vergleich zum Arbeiten mit den realen Hardwarekomponenten.

In besonders vorteilhafter Weise kann mit Hilfe der Erfindung die Leistungsfähigkeit von Bildanalysemöglichkeiten in Kombination mit einem Mikroskop demonstriert werden, ohne dass ein Mikroskop verwendet werden oder tatsächlich vorhanden sein muss. Das besonders kostenintensive Vorhalten von Ausstellungs- und Vorführgeräten kann deshalb weitgehend entfallen. Ein Vertriebsmitarbeiter benötigt typischerweise nur noch einen Computer, beispielsweise ein Notebook.

Weitere vorteilhafte Anwendungen beinhalten das Training und die Ausbildung von Anwendern der Analyse-Software. Außerdem wird auch die Ausbildung und das Training von Anwendern der Analyse-Software in Forschung und Lehre, also im Hinblick auf eine wissenschaftliche Ausbildung, gegebenenfalls mit konkretem Bezug auf die untersuchten Proben, erheblich vereinfacht.

Weiterhin ermöglicht die Erfindung erhebliche Vereinfachungen bei Untersuchungsabläufen. Beispielsweise können einfache Wiederholungen von Untersuchungsabläufen und/oder alternative Analyseansätze durchgeführt werden, ohne dass eine Probe erneut aufgelegt werden muss.

Schließlich können bestehende Analysemodule, welche eigentlich ein Mikroskop und ein Livebild benötigen, auch auf virtuelle Proben angewendet werden, die mit anderen Mitteln, beispielsweise mit anderen Probenscannern oder anderer Aufnahme-Software gewonnen werden.

Die Erfindung ermöglicht außerdem eine effiziente und ergonomische Analyse von so genannten virtual slides, ohne hierfür spezielle Algorithmen entwickeln zu müssen, die normalerweise im Umgang mit sehr großen Bilddateien notwendig wären.

Die Kombination einer virtuellen Kamera, also einer simulierten Kamera, und einem virtuellen Mikroskop, also einem simulierten Mikroskop, bildet eine Einheit und präsentiert als diese Einheit der Analyse-Software stets den korrekten Bildausschnitt. Veränderungen an der Mikroskopseite, beispielsweise eine geänderte Positionierung in den Raumkoordinaten oder ein Objektiv- und/oder Filterwechsel, führen zu einer entsprechend veränderten Darstellung der virtualisierten Probe.

Eine solche virtuelle oder virtualisierte Probe kann insbesondere einen Skalierungswert aufweisen, mit dessen Hilfe kleinere Repräsentationen der Probe oder kleine Ausschnittsbereiche zur Darstellung berechnet werden können. Dadurch kann beispielsweise bei einem Objektivwechsel mit Hilfe der virtuellen Kamera ein entsprechend angepasster Bildausschnitt abgebildet werden. Ebenso kann das Positionieren einer virtuellen Probe mit Hilfe von Verfahranweisungen an den Tisch des virtuellen Mikroskops durch die virtuelle Kamera abgedeckt werden.

Bei besonders bevorzugten Ausgestaltungen der Erfindung werden demnach ein X-Y-Verschiebetisch des Mikroskops und/oder eine Objektivwechseleinrichtung des Mikroskops simuliert. Dabei ist es vorteilhaft, die gleichen Bedienelemente des Mikroskops hierfür zu verwenden.

Bei einer weiteren bevorzugten Variante des erfindungsgemäßen Verfahrens und des erfindungsgemäßen Computerprogramms werden für die Simulation des Bilds, welches die Kamera bei realer Untersuchung der Probe mit dem Mikroskop sehen würde, Einstellungen an externen Bedieneinrichtungen des Mikroskops und/oder an externen Bedieneinrichtungen der Kamera so berücksichtigt, als ob diese Einstellungen im Realbetrieb vorgenommen würden.

Die erfindungsgemäß zu berücksichtigenden Parametereinstellungen des Mikroskops und/oder der Kamera können insbesondere von einem Benutzer an dem Computer vorgenommen werden. Das Mikroskop und die Kamera müssen hierzu nicht konkret vorhanden sein.

Spezielle Eingabegeräte, die den üblichen Bedienelementen eines Mikroskops nachempfunden sind oder mit diesen identisch sind, erhöhen den Realitätsgrad der Simulation. Beispielsweise können die in Mikroskopen verwendeten Bedienelemente, wie Kreuztisch-Steuerung, Z-Trieb-Steuerung oder ein Handrad für den Z-Trieb und/oder eine Objektivrevolver-Steuerung oder ein TFT-Display mit integriertem Touchscreen über so genannte Satelliten am Mikroskop angeschlossen und frei auf einem Arbeitsplatz des Anwenders positioniert werden. Eine vorteilhafte Weiterentwicklung beinhaltet ein direktes Ansprechen des Mikroskopsystems vom Computer aus.

Besonders bevorzugt sind diese externen Bedienelemente oder Eingabegeräte des Mikroskops in einer separaten, mit dem Mikroskop und dem Computer verbindbaren Einheit untergebracht. Insbesondere kann es sich hierbei um eine Bedieneinheit handeln, welche identisch ist mit der im konkreten Messbetrieb verwendeten, auch als Satellitensteuerung bezeichneten Bedieneinheit. Die externen Bedieneinrichtungen des Mikroskops können insbesondere eine Kreuztisch-Steuerung, einen Z-Trieb und/oder eine Objektivrevolversteuerung beinhalten. Prinzipiell kann auch ein Mikroskopdummy verwendet werden, der praktisch alle für einen Benutzer relevanten oder jedenfalls die wichtigsten Bedienelemente eines realen Mikroskops umfasst.

Grundsätzlich kann es sich bei dem verwendeten Computer um denselben Computer handeln, der auch im konkreten Messbetrieb eingesetzt wird, d.h. der verwendete Computer ist dann dazu eingerichtet, als Teil des Mikroskopsystems zu arbeiten. Insbesondere für Anwendungen im Bereich des Vertriebs und der Kundenbetreuung kann der Einsatz von Laptops aufgrund des geringen Platzbedarfs vorteilhaft sein. Hierbei kommen die erfindungsgemäßen Vorteile in besonderer Weise zum Tragen, da an Stelle eines kompletten Mikroskopsystems mit einem Mikroskop, einer Kamera, den entsprechenden Peripheriekomponenten und einem Computer, nur der Computer selbst, beispielsweise eben ein Laptop, zur Demonstration der gesamten Funktionalität erforderlich ist. In diesem Sinn wird durch die vorliegende Erfindung ein gesamtes Mikroskopsystem und nicht nur das Mikroskop als solches simuliert.

Wenn eine virtuelle Probe aufgrund der verwendeten Aufnahmetechnik mehrere Z-Ebenen aufweist, lässt sich beim Laden der Probe nicht nur die X- und Y-Achse, sondern auch die Z-Achse abbilden und virtualisieren oder simulieren. Bei einer vorteilhaften Variante des erfindungsgemäßen Verfahrens und des erfindungsgemäßen Computerprogramms wird demnach ein Z-Trieb des Mikroskops simuliert.

Wenn die virtuelle Probe nur in einer Ebene aufgenommen wurde, so lässt sich durch Bildverarbeitung eine Bewegung in Z-Richtung simulieren. Dies kann beispielsweise durch einen Schärfungs- und/oder einen Weichzeichnungsfilter erfolgen.

Eine weitere Erhöhung der Funktionalität kann erzielt werden, wenn ein hoch aufgelöstes komplettes mikroskopisches Bild der Probe in mehreren Farbkanälen aufgenommen wird und Farbfilter des Mikroskops simuliert werden. Hat also eine virtuelle Probe aufgrund der verwendeten Aufnahmetechnik mehrere Farbkanäle, beispielsweise für unterschiedliche Fluoreszenzkanäle, lässt sich beim Laden der Probe das simulierte Mikroskop mit den zugehören Fluoreszenzfiltern bestücken. Einschwenken eines solchen Filters führt dann zu einer Darstellung des damit erstellten Farbkanals der Probe.

Wenn eine virtuelle Probe aufgrund der verwendeten Aufnahmetechnik eine hohe Dynamik, also eine hohe Bit-Tiefe, aufweist, lässt sich durch Auswahl der relevanten Bits auch eine Variation der Beleuchtungsintensität simulieren. Ein ähnlicher Effekt kann mit einfacher Bildverarbeitung, beispielsweise durch Variation der Helligkeit oder durch Kontrastmanipulation erzielt werden. Verfahrensmäßig wird also das hoch aufgelöste komplette mikroskopische Bild der Probe mit einer hohen Bit-Tiefe, beispielsweise mit der gesamten Tiefe eines 12-Bit-AD-Wandlers, aufgenommen und sodann kann eine Variation einer Beleuchtungsintensität durch Auswahl der relevanten Bits simuliert werden.

Sehr komfortable Möglichkeiten ergeben sich außerdem, wenn eine virtuelle Probe aufgrund der verwendeten Aufnahmetechnik zu mehreren Zeitpunkten aufgenommen wird. Hierbei spricht man auch von Timelapse-Aufnahmen. Die zu unterschiedlichen Zeitpunkten aufgenommenen hoch aufgelösten kompletten mikroskopischen Bilder der Probe können in der simulierten Kamera abgespielt werden. Dabei kann die Aufnahme für unterschiedliche Richtungen und Geschwindigkeiten simuliert werden.

Ein Durchlauf oder ein Test von simulierten Untersuchungsabläufen kann dabei mit höherer Geschwindigkeit erfolgen als bei realer Durchführung. Hierin liegt ebenfalls ein wichtiger Vorteil der Erfindung, da man die mitunter komplexen Untersuchungsabläufe erheblich schneller, sozusagen im Zeitraffer, testen kann und somit Zeit gewinnt.

Grundsätzlich ist auch möglich auf Grundlage von zwei Bildern, die mit einem zeitlichen Abstand zu einander aufgenommen oder simuliert wurden und die beispielsweise mit Hilfe einer elastischen Registrierung verknüpft werden, durch Interpolieren Zwischenbilder zu erzeugen.

Die virtuelle Probe, also das vorab aufgenommene hoch aufgelöste komplette mikroskopische Bild der Probe, kann alle oben aufgeführten Eigenschaften in sich vereinen. Beispielsweise kann in vertretbarer Zeit eine Mehrkanal-Aufnahme eines Mosaiks in vielen Z-Ebenen bei hoher Dynamik verwirklicht werden. Eine solche virtuelle Probe bietet äußerst weitgehende Möglichkeiten der gezielten erfindungsgemäßen Informationsreduzierung.

Ein erheblicher Vorteil der Erfindung besteht auch darin, dass Applikationslösungen mit dem virtuellen System völlig unabhängig vom Mikroskop und der Kamera, sozusagen theoretisch, entwickelt werden können und diese können sodann auf einem System mit realen Komponenten und real zu untersuchenden Proben umgesetzt werden. Dies erleichtert erheblich die Entwicklung von Methoden und komplexen Analyselösungen, bei denen eine komplette Probe bzw. deren Geometrie berücksichtigt werden soll. Zum Beispiel kann das Auffinden von relevanten Bereichen in einer Probe, welche in hoher Auflösung analysiert werden sollen, erheblich vereinfacht und beschleunigt werden.

Die Erfindung ermöglicht somit eine experimentelle Ermittlung und Optimierung von Analysemethoden und -lösungen im Hinblick auf die Genauigkeit, das Zeitverhalten, die statistische Zuverlässigkeit und die Signifikanz der Untersuchungen. Diese Vorgehensweisen werden durch die digitale Natur und die Unzerstörbarkeit der virtuellen Probe ermöglicht.

Bei bevorzugten Varianten des erfindungsgemäßen Verfahrens und des erfindungsgemäßen Computerprogramms werden demnach Untersuchungsabläufe durch einen Benutzer interaktiv anhand des hoch aufgelösten kompletten mikroskopischen Bilds der Probe festgelegt.

Weitere Vorteile und Merkmale der vorliegenden Erfindung werden nachstehend mit Bezug auf die beigefügten Figuren beschrieben. Hierin zeigen:
- Fig. 1: eine schematische Ansicht eines Mikroskopsystems sowie der wesentlichen Bestandteile der Analyse-Software; und
- Fig. 2: eine schematische Ansicht der wesentlichen Blöcke für ein erfindungsgemäßes Computerprogramm.

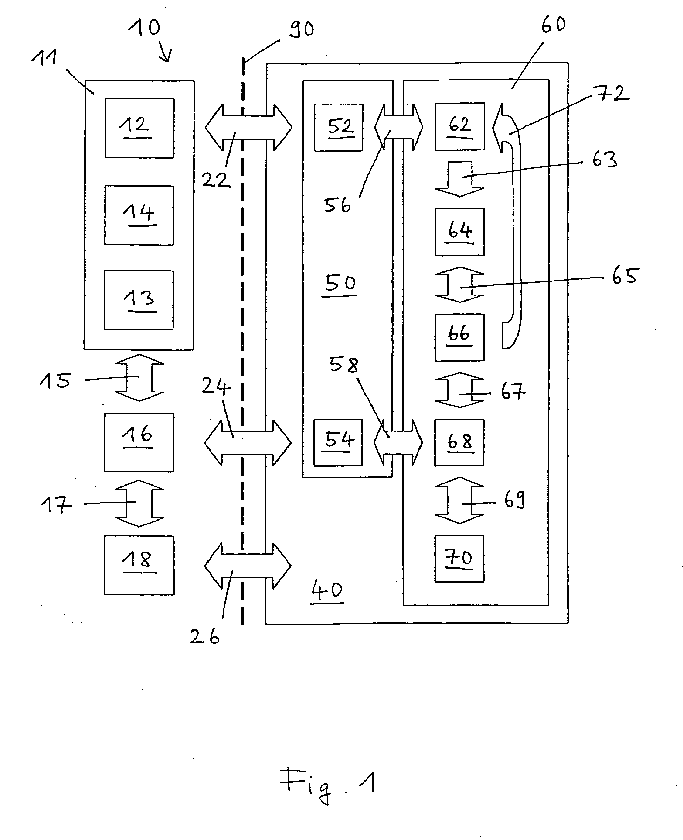

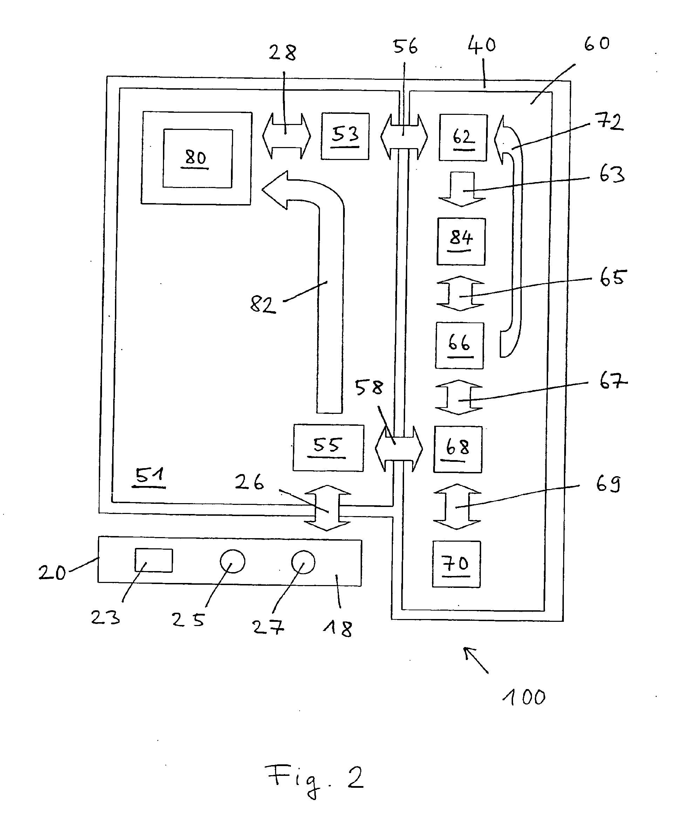

Die wesentlichen Bestandteile der Erfindung werden mit Bezug auf die Figuren 1 und 2 weiter erläutert. Äquivalente Komponenten sind dort jeweils mit denselben Bezugszeichen versehen.

In Fig. 1 ist schematisch der Aufbau eines Mikroskopsystems 10 dargestellt, dessen Abläufe mit Hilfe des erfindungsgemäßen Verfahrens simuliert werden sollen. Der Aufbau besteht aus Hardware-Bestandteilen, die links der gestrichelten Linie 90 dargestellt sind, sowie einem rechts der Linie 90 gezeigten Computer 40 mit blockartig veranschaulichten Programm-Modulen.

Als wesentliche Hardware-Komponenten sind bei dem Mikroskopsystem 10 in einer Mikroskopeinheit 11 ein Mikroskop 14 mit einer daran angeschlossenen Kamera 12 vorgesehen. Weiterhin sind eine Mikroskopsteuereinheit 16 sowie Bedienelemente 18 des Mikroskops 14 vorhanden. Schematisch ist darüber hinaus eine im Mikroskop 14 befindliche Probe 13 gezeigt. Doppelpfeile 15, 17 veranschaulichen die Wechselwirkungen zwischen der Mikroskopeinheit 11 und der Mikroskopsteuereinheit 16 sowie zwischen der Mikroskopsteuereinheit 16 und den externen Bedienelementen 18.

Die rechts der Linie 90 dargestellten Programmblöcke beinhalten im Wesentlichen eine Treiberschicht 50 mit einem Mikroskoptreiber 54 und einem Kameratreiber 52 sowie eine Analyse-Software 60. Die Software insgesamt wirkt vielfältig mit den Hardware-Komponenten, insbesondere mit der Kamera 12, der Mikroskopsteuereinheit 16 und den externen Bedienelementen 18 zusammen. Dies ist durch Doppelpfeile 22, 24, 26 veranschaulicht.

Der konkrete Kameratreiber 52 interagiert mit einem als Kamera-Objekt 62 bezeichneten Programm-Modul, welches eine vereinheitliche Kommunikation mit nachgeordneten Programmbestandteilen ermöglicht. Entsprechend wirkt der konkrete Mikroskoptreiber 54, der hardwareseitig im Wesentlichen mit der Mikroskopsteuereinheit 16 in Verbindung steht, mit einem als Mikroskopobjekt 68 bezeichneten Programm-Modul zusammen, welches wiederum für eine vereinheitlichte Kommunikation mit den übrigen Komponenten sorgt. Die funktionellen Beziehungen zwischen dem Kameraobjekt 62 und dem Kameratreiber 52 einerseits sowie zwischen dem Mikroskopobjekt 68 und dem Mikroskoptreiber 54 andererseits sind in Fig. 1 durch Doppelpfeile 56, 58 veranschaulicht. Von der Kamera 12 aufgenommene Bilddaten einer im Mikroskop 14 angeordneten Probe 13 werden über das Kameraobjekt 62 zu einem Bild 64 aufbereitet, welches zum Beispiel an einem Computermonitor angezeigt und mit weiteren Analyseroutinen 66 weiterverarbeitet werden kann.

Die entsprechenden funktionellen Zusammenhänge sind durch einen Pfeil 63 und einem Doppelpfeil 65 angedeutet. Gegebenenfalls kann ein Resultat einer Analyseroutine 66 rückwirken auf Abläufe der Datenbearbeitung im Kameraobjekt 62, was in Fig. 1 durch einen Pfeil 72 veranschaulicht ist.

Das Kameraobjekt 62 stellt generische Kameraschnittstellen zur Verfügung. Das Kameraobjekt 62 registriert Anweisungen an das simulierte Mikroskop, wie z.B. Tischbewegung, Objektivwechsel usw., und verändert, sofern die entsprechenden Bilddaten vorliegen, entsprechend den sichtbaren Bildausschnitt des zugrundeliegenden Bilds. Wenn das simulierte Mikroskop Reflektorblöcke oder Fluoreszenzfilter aufweist, die ebenfalls im Bild vorkommen, kann der zugehörige Bildkanal angezeigt werden. Objektiv- oder Skalierungswechsel führen im Allgemeinen zu einer Neuberechnung des gezeigten Bildausschnitts.

Mit dem Kameraobjekt 62 und dem simulierten Mikroskop können sehr viele Anwendungsfälle simuliert und komplexe Analyseaufgaben, formuliert in Skripten und Makros, entwickelt werden, ohne dass auf ein reelles Mikroskop und reelle Proben zurückgegriffen werden muss. Mit der vorliegenden Erfindung kann deshalb die volle Leistungsfähigkeit der Bildanalyse demonstriert und einem Kunden präsentiert werden, ohne dass ein Mikroskop vorgehalten werden muss. Der zu Vertriebszwecken notwendige Bestand an Mikroskopen kann deshalb deutlich verringert und die entsprechenden Kosten können gespart werden.

Über eine graphische Benutzerschnittstelle 70 können Parametereinstellungen des Mikroskops 14 und/oder der Kamera 12 sowie eine Vielzahl sonstiger Einstellungen vorgenommen werden. Diese Einstellungen wirken im Allgemeinen zurück auf das angezeigte Bild 64. Beispielsweise können hiermit elementare Bildverarbeitungsfunktionen realisiert werden. Die funktionellen Zusammenhänge sind schematisch durch Doppelpfeile 65, 67, 69 dargestellt.

Ausgehend von dem in Fig. 1 gezeigten Aufbau eines realen Mikroskopsystems 10 mit den entsprechenden Hardware-Komponenten werden nun mit Bezug auf Fig. 2 eine erfindungsgemäße Vorrichtung 100 sowie das erfindungsgemäße Verfahren und das erfindungsgemäße Computerprogramm erläutert.

Hardwareseitig besteht die in Fig. 2 gezeigte Vorrichtung 100 im Unterschied zu dem Aufbau aus Fig. 1 im Wesentlichen nur aus einem Computer 40 mit den entsprechenden funktionellen Programmbestandteilen. Im gezeigten Ausführungsbeispiel sind darüber hinaus in einer separaten Einheit 20 untergebrachte externe Bedienelemente 18 vorhanden, die mit dem Computer 40, veranschaulicht durch einen Pfeil 26, zusammenwirken.

Die funktionalen Programmbestandteile des Computers 40 sind in Fig. 2 ebenfalls unterteilt in eine Treiberschicht 51 und eine Analyse-Software 60. Die Wechselwirkung dieser Blöcke ist durch Pfeile 56, 58 veranschaulicht. Während die Abläufe und Funktionen im Bereich der Analyse-Software 60 weitestgehend denjenigen im realen System aus Fig. 1 entsprechen oder mit diesen identisch sind, bestehen im Bereich der Treiberschicht 51 wesentliche Unterschiede.

Ein vorab aufgenommenes hoch aufgelöstes komplettes mikroskopisches Bild einer Probe ist in Fig. 2 mit dem Bezugszeichen 80 gekennzeichnet. Dieses Bild 80 wird auch als virtuelle Probe bezeichnet. Bei dem Bild 80 handelt es sich typischerweise um einen gescannten Datensatz der Probe mit einer Größe von einigen Gigabyte. Die virtuelle Probe 80 kann ein internes Koordinatensystem, also eine Skalierung, aufweisen.

Anstelle der Treiber für die konkreten Hardware-Komponenten wirkt die Analyse-Software 60 bei der erfindungsgemäßen Vorrichtung 100 mit einem eine Kamera simulierenden Treiber 53 und einem ein Mikroskop simulierenden Treiber 55 zusammen. Hierbei handelt es sich um Programm-Module, welche zwischen der virtuellen Probe 80 und der Analyse-Software 60 eine Verbindung so herstellen, dass aus Sicht der Analyse-Software 60 kein Unterschied besteht, ob sie mit einer realen Treiberschicht 50, wie in Fig. 1 dargestellt, oder mit einer virtuellen Treiberschicht 51, wie in Fig. 2 gezeigt, zusammenwirkt.

Kernbestandteile des erfindungsgemäßen Verfahrens und des erfindungsgemäßen Computerprogramms sind demnach der virtuelle Kameratreiber 53 und der virtuelle Mikroskoptreiber 55, welche beide, veranschaulicht durch Pfeile 28, 82, mit der virtuellen Probe 80 zusammenwirken.

Im Ergebnis wird bei der erfindungsgemäßen Vorrichtung 100 ein Bild 84 dargestellt, welches prinzipiell völlig ununterscheidbar ist von dem Bild 64, was der in Fig. 1 gezeigte Aufbau bei unterstellter physikalischer Identität der Probe liefern würde.

Wie im Realbetrieb kann ein Nutzer sodann über die graphische Benutzerschnittstelle 70 Parameter einstellen oder verändern. Der Realitätsgrad der Simulierung wird außerdem noch erhöht durch die in der separaten Einheit 20 untergebrachten externen Bedienelemente. Im gezeigten Beispiel handelt es sich hierbei um eine Kreuztisch-Steuerung 23, eine Z-Trieb-Steuerung und eine Objektivrevolversteuerung 27. Diese Komponenten können beispielsweise über einen TFT-Bildschirm mit einer Touchscreen-Steuerung betätigt werden. Ergänzend kann auch ein Navigationsgerät vorgesehen sein, welches ein Übersichtsbild einer Probe zeigt. Anhand dieses Übersichtsbilds kann dann ein Nutzer eine Position auswählen und der X-Y-Tisch erhält sodann eine Anweisung, die virtuelle Probe entsprechend zu verfahren. Der gewünschte Ausschnitt wird dann in der Kamera angezeigt.

Wie die virtuelle Probe auf Dateiebene im Detail aussieht spielt für den Grundgedanken der Erfindung keine Rolle, da dies nur eine Frage der Implementierung ist. Zweckmäßig werden Datenformate verwendet, die mehrdimensionale Bilder ermöglichen und/oder Auflösungspyramiden unterstützen. Da eine Kamera nur einen begrenzten Ausschnitt aus einem potentiell sehr großen Bild anzeigt, ist grundsätzlich auch denkbar, dass die Bilddaten über den fraglichen Ausschnitt über ein Netzwerk, also ein LAN oder über das Internet, über geeignete Protokolle der virtuellen Kamera zugeführt werden. Die virtuelle Kamera muss sodann nur die Koordinaten und die Bildgrößen in eine für das jeweils verwendete Protokoll gültige Syntax umsetzen. Hierbei kann es sich gegebenenfalls auch um eine eigene Serversoftware handeln. Kerngedanke der hier vorgestellten Erfindung ist immer ein quasi - natürlicher Betrieb der Analsyse-Software, so als wären Mikroskop und Kamera reell vorhanden. Die Erfindung gestattet weiterhin die Simulierung einer mehrdimensionalen Bildaufnahme. Darüber hinaus wird der Umgang mit virtuellen Proben erheblich erleichtert und kann besser in bereits erlernte Arbeitsschritte integriert werden.

Mit der vorliegenden Erfindung wird ein neues Verfahren zur Bildanalyse mit Hilfe einer virtualisierten Kamera und eines virtualisierten Mikroskops bereitgestellt. Grundgedanke der Erfindung ist, nicht nur die Abläufe in einem Mikroskop, sondern vielmehr ein komplettes Mikroskopsystem, welches insbesondere auch eine Kamera enthält, zu virtualisieren oder zu simulieren. Grundprinzip ist dabei immer der natürliche Betrieb der Analysesoftware so, als ob das Mikroskop die Kamera und die Mikroskopsteuereinheit reell vorhanden wären. Hieraus ergeben sich erhebliche Vorteile, insbesondere für die Schulung und für die Definition von Funktionsabläufen, da die wesentlichen Hardware-Komponenten hierzu nicht mehr bereitgehalten werden müssen.

## Patentansprüche

1. Verfahren zum, dessen und Simulieren von Abläufen in einem Mikroskopsystem (10), welches ein Mikroskop (14) und eine an das Mikroskop (14) angeschlossene Kamera (12) zum Aufnehmen von mikroskopischen Bildern aufweist,
unter Einsatz eines Computerprogramms,
bei dem zunächst als virtuelle Probe (80) ein hoch aufgelöstes komplettes mikroskopisches Bild (80) einer Probe (13) mit dem Mikroskopsystem (10) gewonnen wird,
indem zur Bieddatenaufnahme der Probe in dem Mikroskop (14) angeordneten (13) mit der Kamera (12) ein Programmodul Kamera-objekt (62) mit einem Kamera-Teiber (52) interagiert, welcher mit der Kamera (12) zusammenwirkt, und
ein Programmodul Mikroskop-objekt (63) mit einem Mikrostreiber (54) interagiert, welcher mit einer Mikroskopteuereinheit (16) des Mikroskops (14) zusammenwirkt,
**dadurch gekennzeichnet,**
**dass** ein Bild (84), welches die Kamera (12) bei realer Untersuchung der Probe (13) mit dem Mikroskop (14) sehen würde, auf Grundlage der virtuellen Probe (80) und abhängig von Parametereinstellungen des Mikroskops (14) und der Kamera (12) in einem Computer (40) simuliert wird,
**dass** eine Analysesoftware (60) mit dem Programmmodul "Kamera-Objekt" (62) und dem Programmmodul "Mikroskop-Objekt" (68) verwendet wird,
**dass** Bilddaten über das Kamera-Objekt (62) zu dem Bild (84), welches die Kamera (12) bei realer Untersuchung der Probe (13) mit dem Mikroskop (14) sehen würde, aufbereitet werden,
**dass** das Bild (84) mit Analyseroutinen (66) der Analysesoftware (60) weiterverarbeitet wird,
wobei das Kamera mit einem virtuellen Kameratreiber (53) und das Mikroskop mit einem virtuellen Mikroskoptreiber (55) simuliert wird,
wobei der virtuelle Kameratreiber (53) mit dem Kamera-Objekt (62) zusammenwirkt und der virtuelle Mikroskoptreiber (55) mit dem Mikroskop-Objekt (68) zusammenwirkt,
wobei durch den virtuellen Kameratreiber (53) und den virtuellen Mikroskoptreiber (55) zwischen der virtuellen Probe (80) und dem Kamera-Objekt (62) und dem Mikroskop-Objekt (68) der Analysesoftware (60) eine Verbindung so hergestellt wird, dass aus Sicht der Analysesoftware (60) kein Unterschied besteht, ob sie mit der realen Treiberschicht (50) mit dem Kameratreiber (52) und dem Mikroskoptreiber (54) oder virtuellen Treiberschicht (51) mit dem virtuellen Kameratreiber (53) und dem virtuellen Mikroskoptreiber (55) zusammenwirkt, und
wobei das Bild (84) mit Analyseroutinen (66) der Analysesoftware (60) weiterverarbeitet wird, und wobei über eine graphische Benutzerschnittstelle (70) der Analysesoftware (60) sowohl im Realbetrieb als auch im Simulationsbetrieb Parametereinstellungen vorgenommen werden.

2. Verfahren nach Anspruch 1,
**dadurch gekennzeichnet,**
**dass** für die Simulation des Bilds (84), welches die Kamera (12) bei realer Untersuchung der Probe (13) mit dem Mikroskop (14) sehen würde, Einstellungen, die an externen Bedieneinrichtungen (18) des Mikroskops (14) und/oder an externen Bedieneinrichtungen der Kamera (12) vorgenommen werden, so berücksichtigt werden, als ob diese Einstellungen im Realbetrieb vorgenommen würden.

3. Verfahren nach Anspruch 1 oder 2,
**dadurch gekennzeichnet,**
**dass** das hoch aufgelöste komplette mikroskopische Bild (80) der Probe in mehreren Z-Ebenen aufgenommen wird und
**dass** ein Z-Trieb des Mikroskops (14) simuliert wird.

4. Verfahren nach einem der Ansprüche 1 bis 3,
**dadurch gekennzeichnet,**
**dass** eine Bewegung in Z-Richtung durch einen Schärfungs- und/oder einen Weichzeichnungsfilter simuliert wird.

5. Verfahren nach einem der Ansprüche 1 bis 4,
**dadurch gekennzeichnet,**
**dass** ein X-Y-Verschiebetisch des Mikroskops (14) simuliert wird.

6. Verfahren nach einem der Ansprüche 1 bis 5,
**dadurch gekennzeichnet,**
**dass** eine Objektivwechseleinrichtung des Mikroskops (14) simuliert wird.

7. Verfahren nach einem der Ansprüche 1 bis 6,
**dadurch gekennzeichnet,**
**dass** das hoch aufgelöste komplette mikroskopische Bild (80) der Probe (13) mit hoher Bit-Tiefe aufgenommen wird und
das eine Variation einer Beleuchtungsintensität durch Auswahl von relevanten Bits simuliert wird.

8. Verfahren nach einem der Ansprüche 1 bis 7,
**dadurch gekennzeichnet,**
**dass** das hoch aufgelöste komplette mikroskopische Bild (80) der Probe (13) zu unterschiedlichen Zeitpunkten aufgenommen wird und
**dass** die Aufnahme für unterschiedliche Richtungen und Geschwindigkeiten simuliert wird.

9. Verfahren nach einem der Ansprüche 1 bis 8,
**dadurch gekennzeichnet,**
**dass** Untersuchungsabläufe durch einen Benutzer interaktiv anhand des hoch aufgelösten kompletten mikroskopischen Bilds (80) der Probe (13) festgelegt werden.

10. Verfahren nach einem der Ansprüche 1 bis 9,
**dadurch gekennzeichnet,**
**dass** das hoch aufgelöste komplette mikroskopische Bild (80) der Probe (13) in mehreren Farbkanälen aufgenommen wird und
**dass** Farbfilter des Mikroskops (14) simuliert werden.

11. Mikroskopsystem (10) zur Durchfuhrung des Verfahrens nach einem der Ansprüche 1 bis 10,
mit einem Mikroskop (14) und einer zu das Mikroskop (14) angeschlossenen Kamera (12) zum Aufnahmen von mikroskopischen Biedern und mit einem Computer (40).

12. Mikroskopsystem nach Anspruch 11,
**dadurch gekennzeichnet,**
**dass** eine Kreuztisch-Steuerung (23), ein Z-Trieb (25) und/oder eine Objektivrevolversteuerung (27) des Mikroskops (12) mit dem Computer (40) verbunden sind und
**dass** für die Simulation des Bilds (84), welches die Kamera (12) bei realer Untersuchung der Probe (13) mit dem Mikroskop (14) sehen würde, Einstellungen, die an der Kreuztisch-Steuerung (23), dem Z-Trieb (25) und/oder der Objektivrevolversteuerung (27) vorgenommen werden, so berücksichtigt werden, als ob diese Einstellungen im Realbetrieb mit einem Mikroskop vorgenommen würden.

13. Mikroskopsystem nach Anspruch 12,
**dadurch gekennzeichnet,**
**dass** die Kreuztisch-Steuerung (23), der Z-Trieb (25) und/oder die Objektivrevolversteuerung (27) in einer separaten mit dem Mikroskop (12) und dem Computer (40) verbindbaren Einheit (20) untergebracht sind.

## Claims

1. A method for measuring and simulating a sequence of operations in a microscope system (10), comprising a microscope (14) and a camera (12) mounted on said microscope (14) for the purpose of creating microscopic images with implementation of a computer program,
in which a complete high-resolution microscopic image (80) of a sample (13) is first acquired by means of said microscope system (10) to form a virtual sample (80),
in that, for the purpose of recording image data of the sample (13) disposed in the microscope (14) by means of said camera (12), a program module "camera-object" (62) interacts with a camera driver (52) adapted to cooperate with said camera (12), and a program module "microscope-object" (68) interacts with a microscope driver (54) adapted to cooperate with a microscope control unit (16) pertaining to said microscope (14),
**characterized in that**
an image (84) such as would see said camera (12) when examining said sample (13) using said microscope (14) in real mode, is simulated in a computer (40) on the basis of said virtual sample (80) and dependent of the parameter settings for said microscope (14) and for said camera (12),
that an analysis software (60) comprising said program module "camera-object" (62) and said program module "microscope-object" (68) is used,
that image data are reprocessed via said "camera-object" (62) to provide said image (84) such as would see said camera (12) when examining said sample (13) using said microscope (14) in real mode,
that said image (84) is further processed using analysis routines (66) of said analysis software (60),
wherein said camera is simulated with a virtual camera driver (53) and said microscope is simulated with a virtual microscope driver (55),
wherein said virtual camera driver (53) cooperates with said "camera-object" (62) and said virtual microscope driver (55) cooperates with said "microscope-object" (68),
wherein, by means of said virtual camera driver (53) and said virtual microscope driver (55), there is established a connection between said virtual sample (80) and said "camera-object"(62) and said "microscope-object" (68) of said analysis software (60) such that as far as said analysis software (60) is concerned there is no difference to be found between cooperating with said real driver layer (50) comprising said camera driver (52) and said microscope driver (54) and cooperating with said virtual driver layer (51) comprising said virtual camera driver (53) and said virtual microscope driver (55), and wherein said image (84) is further processed by analysis routines (66) of said analysis software (60), and wherein parameters are set via a graphical user interface (70) of said analysis software (60) both in real mode and in simulation mode.

2. The method as defined in claim 1,
**characterized in that**
for the purpose of simulating said image (84) such as would see said camera (12) when examining said sample (13) using said microscope (14) in real mode, adjustments carried out on external operator control devices (18) of said microscope (14) and/or on external operator control devices of said camera (12), are allowed for as if such adjustments had been carried out in real mode.

3. The method as defined in claim 1 or claim 2,
**characterized in that**
the complete high-resolution microscopic image (80) of said sample is recorded at a plurality of Z levels and
that a Z drive for said microscope (14) is simulated.

4. The method as defined in any one of claims 1 to 3,
**characterized in that**
a movement in the Z direction is simulated by a sharpening filter or a softening filter as required.

5. The method as defined in any one of claims 1 to 4,
**characterized in that**
an XY translation stage for the microscope (14) is simulated.

6. The method as defined in any one of claims 1 to 5,
**characterized in that**
an objective changer for the microscope (14) is simulated.

7. The method as defined in any one of claims 1 to 6,
**characterized in that**
said complete high-resolution microscopic image (80) of said sample (13) is recorded at a high bit depth and
that varying the intensity of illumination is simulated by selecting relevant bits.

8. The method as defined in any one of claims 1 to 7,
**characterized in that**
said complete high-resolution microscopic image (80) of said sample (13) is recorded at different times and
that recording is simulated for different directions and speeds.

9. The method as defined in any one of claims 1 to 8,
**characterized in that**
test sequences are interactively defined by a user on the basis of said complete high-resolution microscopic image (80) of said sample (13).

10. The method as defined in any one of claims 1 to 9,
**characterized in that**
said complete high-resolution microscopic image (80) of said sample (13) is recorded in a plurality of color channels and
that color filters for said microscope (14) are simulated.

11. A microscope system (10) for carrying out the method as defined in any one of claims 1 to 10,
comprising a microscope (14) and a camera (12) mounted on said microscope (14) for the purpose of recording microscopic images, and comprising a computer (40).

12. The microscope system as defined in claim 11,
**characterized in that**
an XY translation stage control means (23), a Z drive (25) and/or an objective-revolving control means (27) for said microscope (12) are linked with said computer (40) and
that for the purpose of simulating said image (84) such as would see said camera (12) when examining said sample (13) using said microscope (14) in real mode, adjustments carried out on said XY translation stage control means (23), said Z drive (25) and/or said objective-revolving control means (27) are allowed for as if these adjustments had been effected using a microscope in real mode.

13. The microscope system as defined in claim 12,
**characterized in that**
said XY translation stage control means (23), said Z drive (25) and/or said objective-revolving control means (27) are accommodated in a separate unit (20) adapted for connection to said microscope (12) and to said computer (40).

## Revendications

1. Procédé destiné à la mesure et à la simulation des processus de déroulement dans un système de microscope (10), qui comprend un microscope (14) et un appareil photo (12) relié au microscope (14) pour le prélèvement d'images microscopiques,
sous la supervision d'un programme d'ordinateur,
dans lequel, tout d'abord, à titre d'échantillon virtuel (80), une image microscopique (80) complète à haute résolution d'un échantillon (13) est constituée avec le système de microscope (10),
dans lequel, pour la collecte de données d'image de l'échantillon (13) mis en place dans le microscope (14) avec l'appareil photo (12), un module de programme servant d'objet appareil photo (62) interagit avec un dispositif de pilotage d'appareil photo (52) qui coopère avec l'appareil photo (12), et un module de programme servant d'objet microscope (68) interagit avec un dispositif de pilotage de microscope (54) qui coopère avec une unité de commande de microscope (16) du microscope (14),
**caractérisé :**
**en ce qu'**une image (84), que l'appareil photo (12) verrait lors d'un examen réel de l'échantillon (13) avec le microscope (14), est simulée dans un ordinateur (40) sur la base de l'échantillon virtuel (80) et en fonction de réglages de paramètres du microscope (14) et de l'appareil photo (12),
**en ce qu'**un logiciel d'analyse (60) est utilisé avec le module de programme « objet appareil photo (62) » et avec le module de programme « objet microscope (68) »,
**en ce que** des données d'image relatives à l'objet appareil photo (62) sont traitées pour l'image (84) que l'appareil photo (12) verrait lors d'un examen réel de l'échantillon (13) avec le microscope (14),
**en ce que** l'image (84) est ensuite traitée avec des programmes d'analyse (66) du logiciel d'analyse (60),
l'appareil photo étant simulé à l'aide d'un dispositif de pilotage d'appareil photo virtuel (53) et le microscope étant simulé à l'aide d'un dispositif de pilotage de microscope virtuel (55),
le dispositif de pilotage d'appareil photo virtuel (53) coopérant avec l'objet appareil photo (62) et le dispositif de pilotage de microscope virtuel (55) coopérant avec l'objet microscope (68),
une liaison étant établie, au moyen du dispositif de pilotage d'appareil photo virtuel (53) et du dispositif de pilotage de microscope virtuel (55), entre l'échantillon virtuel (80) et les objet appareil photo (62) et objet microscope (68) du logiciel d'analyse (60) d'une manière telle que, du point de vue du logiciel d'analyse (60), il n'y a pas de différence si ce dernier coopère avec le sous-ensemble de pilotage réel (50), avec le dispositif de pilotage d'appareil photo (52) et avec le dispositif de pilotage de microscope (54) ou bien s'il coopère avec le sous-ensemble de pilotage virtuel (51), avec le dispositif de pilotage d'appareil photo virtuel (53) et avec le dispositif de pilotage de microscope virtuel (55),
et
l'image (84) étant ensuite traitée avec des programmes d'analyse (66) du logiciel d'analyse (60), et des réglages de paramètres étant effectués, non seulement dans l'exploitation réelle mais aussi dans l'exploitation par simulation, sur une interface graphique d'utilisateur (70) du logiciel d'analyse (60).

2. Procédé selon la revendication 1,
**caractérisé :**
**en ce que**, pour la simulation de l'image (84) que l'appareil photo (12) verrait lors d'un examen réel de l'échantillon (13) avec le microscope (14), des réglages, qui sont effectués sur les équipements de fonctionnement externes (18) du microscope (14) et/ou sur les équipements de fonctionnement externes de l'appareil photo (12), sont pris en considération comme si ces réglages étaient effectués lors d'une exploitation réelle.

3. Procédé selon la revendication 1 ou 2,
**caractérisé :**
**en ce que** l'image microscopique (80) complète à haute résolution de l'échantillon est prélevée dans plusieurs plans Z et
**en ce qu'**un déplacement du microscope (14) selon Z est simulé.

4. Procédé selon une des revendications 1 à 3,
**caractérisé :**
**en ce qu'**un déplacement dans la direction Z est simulé au moyen d'un filtre de renforcement et/ou d'un filtre d'effet de flou.

5. Procédé selon une des revendications 1 à 4,
**caractérisé :**
**en ce qu'**une table de déplacement en X et en Y du microscope (14) est simulée.

6. Procédé selon une des revendications 1 à 5,
**caractérisé :**
**en ce qu'**un dispositif de changement d'objectif du microscope (14) est simulé.

7. Procédé selon une des revendications 1 à 6,
**caractérisé :**
**en ce que** l'image microscopique (80) complète à haute résolution de l'échantillon (13) est prélevée avec une profondeur de bits élevée et
**en ce qu'**une variation de l'intensité d'éclairement est simulée par l'intermédiaire d'un choix des bits appropriés.

8. Procédé selon une des revendications 1 à 7,
**caractérisé :**
**en ce que** l'image microscopique (80) complète à haute résolution de l'échantillon (13) est prélevée à des instants différents et
**en ce que** le prélèvement est simulé pour différentes directions et différentes vitesses.

9. Procédé selon une des revendications 1 à 8,
**caractérisé :**
**en ce que** les processus de déroulement de l'examen par un utilisateur sont fixés de manière interactive à l'aide de l'image microscopique (80) complète à haute résolution de l'échantillon (13).

10. Procédé selon une des revendications 1 à 9,
**caractérisé :**
**en ce que** l'image microscopique (80) complète à haute résolution de l'échantillon (13) est prélevée dans plusieurs canaux de couleur et
**en ce que** des filtres de couleur du microscope (14) sont simulés.

11. Système de microscope (10) destiné à la mise en oeuvre du procédé selon l'une des revendications 1 à 10,
avec un microscope (14) et un appareil photo (12) relié au microscope (14) pour le prélèvement d'images microscopiques, et avec un ordinateur (40).

12. Système de microscope selon la revendication 11,
**caractérisé :**
**en ce qu'**une commande de table de positionnement (23), un dispositif d'entraînement selon Z (25) et/ou une commande de tourelle porte-objectifs (27) du microscope (14) sont reliés à l'ordinateur (40), et
**en ce que**, pour la simulation de l'image (84) que l'appareil photo (12) verrait lors d'un examen réel de l'échantillon (13) avec le microscope (14), des réglages, qui sont effectués sur la commande de table de positionnement (23), le dispositif d'entraînement selon Z (25) et/ou la commande de tourelle porte-objectifs (27), sont pris en considération comme si ces réglages étaient effectués lors d'une exploitation réelle avec un microscope.

13. Système de microscope selon la revendication 12,
**caractérisé :**
**en ce que** la commande de table de positionnement (23), le dispositif d'entraînement selon Z (25) et/ou la commande de tourelle porte-objectifs (27) sont prévus dans une unité (20) distincte pouvant être reliée au microscope (14) et à l'ordinateur (40).
